# EUROPÄISCHE PATENTSCHRIFT

(11) **EP 2 882 630 B1**
(45) Veröffentlichungstag und Bekanntmachung des Hinweises auf die Patenterteilung: **12.10.2016**
(21) Anmeldenummer: 13729605.9
(22) Anmeldetag: 12.06.2013
(51) Int. Cl.: B62D 1/04

(54) **LENKHANDHABE FÜR EINEN KRAFTWAGEN SOWIE KRAFTWAGEN MIT EINER SOLCHEN LENKHANDHABE**
STEERING HANDLE FOR A MOTOR VEHICLE AND MOTOR VEHICLE COMPRISING SUCH STEERING HANDLE
MANETTE DE DIRECTION POUR UN VÉHICULE AUTOMOBILE AINSI QUE VÉHICULE AUTOMOBILE ÉQUIPÉ D'UNE TELLE MANETTE DE DIRECTION

(30) Priorität: 10.08.2012 DE 102012015909
(43) Veröffentlichungstag der Anmeldung: 17.06.2015
(73) Patentinhaber: Audi AG, 85045 Ingolstadt (DE)
(72) Erfinder: WALL, Christian, 85122 Hitzhofen (DE)
(74) Vertreter: Brandt, Kai
(86) Internationale Anmeldenummer: PCT/EP2013/001731
(87) Internationale Veröffentlichungsnummer: WO 2014/023368

(56) Entgegenhaltungen:
- EP-A2- 1 232 909
- DE-A1- 4 423 744
- DE-A1- 10 004 965
- DE-A1- 10 035 045
- DE-A1- 19 743 023
- DE-A1- 19 743 024

## Beschreibung

Die Erfindung betrifft eine Lenkhandhabe für einen Kraftwagen gemäß dem Oberbegriff von Patentanspruch 1.

Eine solche Lenkhandhabe für einen Kraftwagen ist der DE 197 43 023 A1 als bekannt zu entnehmen. Die Lenkhandhabe ist dort als Lenkrad ausgebildet und dient in ihrem am Kraftwagen montierten Zustand dazu, eine Richtungsänderung des Kraftwagens zu bewirken.

Die Lenkhandhabe weist wenigstens ein an einem korrespondierenden Befestigungselement der Lenkhandhabe gehaltenes Kugelelement in Form eines sogenannten Trackballs auf. Der Trackball (dt. Rollkugel) ist um beliebige, in einer gemeinsamen Ebene angeordnete Drehachsen drehbar und dient beispielsweise dazu, eine Funktion des Kraftwagens zu bewirken. Mittels des Trackballs ist es möglich, die Funktion einer Computermaus eines Notebooks oder eines PCs (PC - Personal Computer) platzsparend darzustellen.

Der um wenigstens eine Schwenkachse relativ zum Befestigungselement verschwenkbare Trackball ist für einen den Trackball verschwenkenden Nutzer von einer jeweiligen, dem Nutzer zugewandten Vorderseite der Lenkhandhabe und des Trackballs aus zugänglich.

Auch die DE 197 43 024 A1 offenbart eine Lenkhandhabe für einen Kraftwagen in Form eines Lenkrads, über welche in ihrem am Kraftwagen montierten Zustand eine Richtungsänderung des Kraftwagens bewirkbar ist und welche wenigstens ein an einem korrespondierenden Befestigungselement der Lenkhandhabe gehaltenes Kugelelement aufweist. Das Kugelelement ist in Form eines Trackballs ausgebildet und um wenigstens eine Schwenkachse relativ zum Befestigungselement verschwenkar. Ferner ist das Kugelelement für einen das Kugelelement verschwenkenden Nutzer von einer jeweiligen, dem Nutzer zugewandten Vorderseite der Lenkhandhabe und des Kugelelements aus zugänglich.

Aus der US 2010/0288072 A1 ist ein Lenkrad bekannt, welches ein um eine Drehachse drehbares, freistehendes Drehrad als Bedienelement umfasst.

Die DE 103 61 716 A1 offenbart eine Fernsteuertastenanordnung, eingebaut in ein Fahrzeuglenkrad, mit mehr als drei auf einer vorderen Fläche eines Lenkrads angeordneten vorderen Tasten, und mit mindestens einer seitlichen Taste, die in einem unteren Abschnitt einer seitlichen Fläche eines Angriffsbereichs vorgesehen ist, in dem die vorderen Tasten vorgesehen sind.

Der DE 10 2006 053 499 A1 ist ein Lenkradschaltermodul für ein Kraftfahrzeug zur Integration in ein gespeichtes Lenkrad des Kraftfahrzeugs als bekannt zu entnehmen. Das Lenkradschaltermodul umfasst mindestens zwei mehrtastige Bedienungsschalteranordnungen, wobei das Lenkradschaltermodul derart ausgestaltet ist, dass es als Ganzes vorgefertigt in das Lenkrad ein- und ausbaubar ist. Schließlich geht aus der US 2001/0002646 A1 ein Lenkrad mit Bedientasten hervor. Die bekannten Lenkhandhaben weisen eine verbesserungswürdige Bedienbarkeit auf.

Es ist daher Aufgabe der vorliegenden Erfindung, eine Lenkhandhabe für einen Kraftwagen bereitzustellen, welche eine besonders gute Bedienbarkeit aufweist.

Diese Aufgabe wird durch eine Lenkhandhabe für einen Kraftwagen mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Über eine solche Lenkhandhabe ist in ihrem am Kraftwagen montierten Zustand eine Richtungsänderung des Kraftwagens bewirkbar. Die Lenkhandhabe weist wenigstens ein an einem korrespondierenden Befestigungselement der Lenkhandhabe gehaltenes Kugelelement als ein Bedienelement aufweist. Dies bedeutet, dass mittels des Kugelelements wenigstens eine Funktion des Kraftwagens durch einen Nutzer der Lenkhandhabe bewirkbar ist.

Das Kugelelement ist dabei um wenigstens eine Schwenkachse relativ zum Befestigungselement verschwenkbar und für einen das Kugelelement verschwenkenden Nutzer von einer jeweiligen, dem Nutzer zugewandten Vorderseite der Lenkhandhabe und des Kugelelements aus zugänglich. Mit anderen Worten kann der Nutzer das Kugelelement von der jeweiligen Vorderseite aus berühren und dadurch um die Schwenkachse verschwenken, um so die Funktion zu bewirken.

Zur Realisierung einer besonders guten und flexiblen, d.h. vielfältigen Bedienbarkeit des Kugelelements ist es erfindungsgemäß vorgesehen, dass das Kugelelement für den Nutzer auch von einer jeweiligen, dem Nutzer und der Vorderseite abgewandten Rückseite der Lenkhandhabe und des Kugelelements aus zugänglich ist. Mit anderen Worten kann der Nutzer das Kugelelement auch von der Rückseite des Kugelelements und der Lenkhandhabe aus berühren und dadurch das Kugelelement relativ zum Befestigungselement verschwenken.

In besonders vorteilhafter Ausgestaltung der Erfindung ist durch ein Betätigen des Kugelelements von der jeweiligen Vorderseite aus eine erste Funktion des Kraftwagens bewirkbar, während durch ein Betätigen des Kugelelements von der jeweiligen Rückseite aus eine von der ersten Funktion unterschiedliche, zweite Funktion des Kraftwagens bewirkbar ist.

Durch diese beidseitige Betätigbarkeit des Kugelelements sind voneinander unterschiedliche Funktionen bewirkbar, so dass auf bauraumneutrale Weise eine Verdopplung der Anzahl an Funktionen, welche durch Betätigen bzw. Verschwenken des Kugelelements bewirkbar sind, realisiert werden kann.

Um die Bedienung des Kugelelements von der Vorderseite oder von der Rückseite aus zu erfassen, ist beispielsweise wenigstens ein entsprechendes Erfassungselement vorgesehen. Infolge dieser Unterscheidung der Bedienung des Kugelelements und der daraus folgenden Realisierbarkeit einer besonders hohen Anzahl an bewirkbaren Funktionen oder Eingabemöglichkeiten können zusätzliche, kosten-, bauraum- und gewichtsintensive Schalter vermieden werden. Alternativ oder zusätzlich ist beispielsweise vorgesehen, dass durch Betätigen des Kugelelements von der Vorderseite aus eine erster Schalter und durch Betätigen des Kugelelements von der Rückseite aus ein zweiter Schalter geschlossen wird. Durch das jeweilige Schließen des entsprechenden Schalters wird dann eine jeweilige Funktion des Kraftwagens bewirkt.

Als besonders vorteilhaft hat es sich gezeigt, wenn das Kugelelement um beliebige, in einer gemeinsamen Ebene angeordnete Schwenkachsen verschwenkbar ist. Durch das Kugelelement ist somit ein sogenannter Trackball (dt. Rollkugel) geschaffen, welcher beispielsweise die Funktion einer Computermaus auf platzsparende Weise erfüllen kann. Mittels des Trackballs ist es beispielsweise möglich, ein auf einem Bildschirm des Kraftwagens dargestelltes Zeigerelement, einen sogenannten Cursor, auf einer durch den Bildschirm angezeigten Bedienoberfläche zu bewegen. Alternativ oder zusätzlich ist es möglich, durch Verschwenken des Trackballs durch unterschiedliche Menüpunkte eines Menüs, sogenannte Registerkarten auf dem Bildschirm zu blättern.

Zur Realisierung eines besonders hohen Funktionserfüllungsumfangs des Kugelelements ist es bei einer weiteren Ausführungsform der Erfindung vorgesehen, dass das Kugelelement senkrecht zur Schwenkachse bzw. senkrecht zur Ebene von dem Nutzer drückbar und für den das Kugelelement drückenden Nutzer sowohl von der jeweiligen Vorderseite als auch von der jeweiligen Rückseite aus zugänglich ist.

In weiterer Ausgestaltung der Erfindung ist die Lenkhandhabe als Lenkrad mit einer Lenkradnabe und einem Lenkradkranz ausgebildet, wobei der Lenkradkranz über wenigstens eine Lenkradspeiche mit der Lenkradnabe verbunden ist. Das Kugelelement ist dabei an der Lenkradspeiche als dem Befestigungselement gehalten. Hierdurch ist eine besonders ergonomische Bedienbarkeit der Lenkhandhabe geschaffen, so dass der Fahrer das Kugelelement auch während der Fahrt auf einfache Weise bedienen kann, ohne dass die Betätigung des Kugelelements den Fahrer vom Verkehrsgeschehen ablenken würde.

Zur Erfindung gehört auch ein Kraftwagen, insbesondere einen Personenkraftwagen, mit einer erfindungsgemäßen Lenkhandhabe. Vorteilhafte Ausgestaltungen der Lenkhandhabe sind als vorteilhafte Ausgestaltungen des Kraftwagens anzusehen und umgekehrt. Die Lenkhandhabe weist eine besonders gute, flexible und ergonomische Betätigbarkeit auf, so dass eine ergonomisch sehr gute Schnittstelle zwischen dem Nutzer und dem Kraftwagen geschaffen ist.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

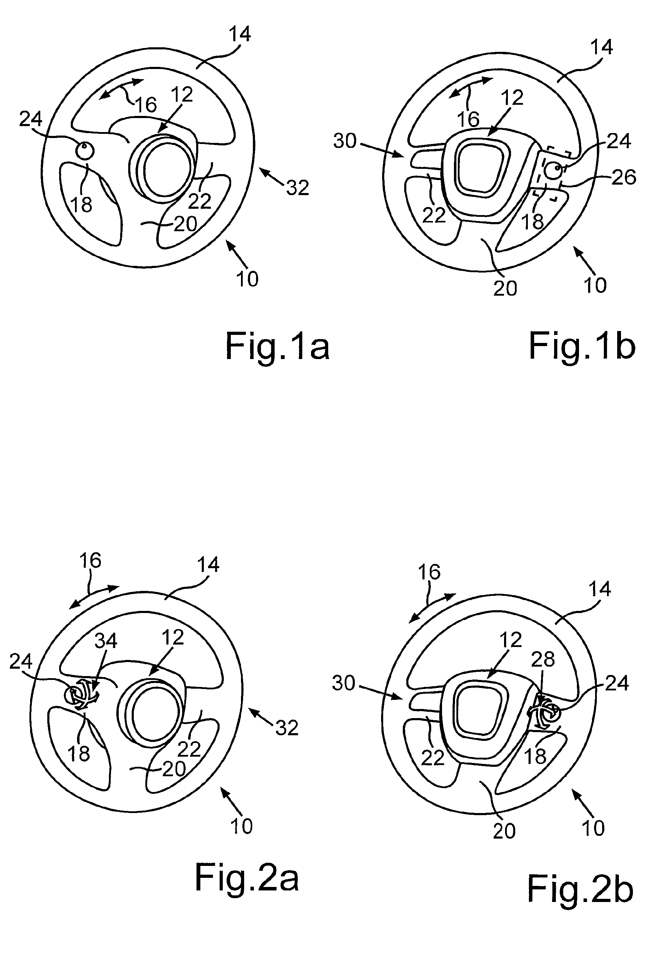

- Fig. 1 a: eine schematische und perspektivische Rückansicht einer Lenkhandhabe in Form eines Lenkrads für einen Personenkraftwagen, mit einem Kugelelement, welches für einen Nutzer von einer jeweiligen, dem Nutzer zugewandten Vorderseite des Lenkrads und des Kugelelements sowie von einer jeweiligen, dem Nutzer und der Vorderseite abgewandten Rückseite des Lenkrads und des Kugelelements aus zugänglich ist;
- Fig. 1 b: eine schematische und perspektivische Vorderansicht des Lenkrads;
- Fig. 2a: eine schematische und perspektivische Rückansicht des Lenkrads, wobei das Verschwenken des Kugelelements von der Rückseite aus veranschaulicht ist;
- Fig. 2b: eine schematische und perspektivische Vorderansicht des Lenkrads, wobei das Verschwenken des Kugelelements von der Vorderseite aus veranschaulicht ist;
- Fig. 3a: eine schematische und perspektivische Rückansicht des Lenkrads, wobei ein Drücken des Kugelelements von der Rückseite aus veranschaulicht ist; und
- Fig. 3b: eine schematische und perspektivische Vorderansicht des Lenkrads, wobei ein Drücken des Kugelelements von der Vorderseite aus veranschaulicht ist.

Fig. 1a bis 3b zeigen eine Lenkhandhabe in Form eines Lenkrads 10 für einen Personenkraftwagen. Das Lenkrad 10 weist eine Lenkradnabe 12 sowie einen Lenkradkranz 14 auf, welcher die Lenkradnabe 12 in durch einen Richtungspfeil 16 veranschaulichter Umfangsrichtung des Lenkrads 10 außenumfangsseitig umgibt und vorliegend über drei Lenkradspeichen 18, 20, 22 mit der Lenkradnabe 12 verbunden ist.

Über die Lenkradnabe 12 ist das Lenkrad 10 mit einem Lenkgestänge des Personenkraftwagens verbindbar, so dass über das Lenkrad 10 in seinem am Personenkraftwagen montierten Zustand eine Richtungsänderung des Personenkraftwagens bewirkbar ist. Dazu wird das Lenkrad 10 um eine in Fig. 1a bis 3b nicht gezeigte Drehachse gemäß dem Richtungspfeil 16 gedreht. Dieses Drehen des Lenkrads 10 bewirkt ein entsprechendes Lenken von lenkbaren Rädern des Personenkraftwagens, so dass daraus eine Richtungsänderung des Personenkraftwagens resultiert.

In die Lenkradnabe 12 ist vorteilhafterweise ein in Fig. 1a bis 3b nicht erkennbarer Airbag integriert, welcher bei einer unfallbedingten Kraftbeaufschlagung aus einer Aufbewahrungsposition in eine Rückhalteposition bewegbar ist. Dazu wird beispielsweise wenigstens ein Auffangelement des Airbags mittels wenigstens eines Gasgenerators mit einem Gas, insbesondere Luft, aufgeblasen.

In der Rückhalteposition nimmt das Auffangelement ein Rückhaltevolumen im Innenraum des Personenkraftwagens ein, so dass der Fahrer des Personenkraftwagens bei einer unfallbedingten Verlagerung mittels des Auffangelements auffangbar, rückzuhalten und so vor schwerwiegenden Verletzungen zu schützen ist.

Das Lenkrad 10 weist auch ein Bedienelement in Form eines Kugelelements 24 auf. Das Kugelelement 24 ist an der Lenkradspeiche 18 gehalten. Mit anderen Worten ist die Lenkradspeiche 18 ein mit dem Kugelelement 24 korrespondierendes Befestigungselement, an welchem das Kugelelement 24 um wenigstens eine Schwenkachse relativ zum Befestigungselement (Lenkradspeiche 18) verschwenkbar gehalten ist. Vorliegend ist das Kugelelement 24 um beliebige, in einer gemeinsamen, gedachten Ebene 26 angeordnete Schwenkachsen verschwenkbar. Somit kann das Kugelelement 24 - wie in Fig. 2b durch Richtungspfeile 28 angedeutet ist - beliebig verschwenkt bzw. gedreht werden. Durch das Kugelelement 24 ist somit ein sogenannter Trackball dargestellt.

Das Kugelelement 24 ist dabei für den das Kugelelement 24 verschwenkenden Fahrer von einer jeweiligen, dem Fahrer zugewandten Vorderseite 30 des Lenkrads 10 und des Kugelelements 24 aus zugänglich. Mit anderen Worten kann der Fahrer als Nutzer des Kugelelements 24 das Kugelelement 24 von der Vorderseite 30 des Lenkrads 10 und des Kugelelements 24 aus berühren und in der Folge relativ zur Lenkradspeiche 18 verschwenken bzw. drehen. Dazu überragt das Kugelelement 24 die Lenkradspeiche 18 auf der Vorderseite 30 in Richtung des Fahrers zumindest teilweise. Alternativ dazu ist es möglich, dass das Kugelelement 24 gegenüber der Lenkradspeiche 18 von dem Fahrer weg zurückversetzt ist und beispielsweise über eine Durchgangsöffnung der Lenkradspeiche 18 für den Fahrer von der Vorderseite 30 aus zugänglich ist.

Zur Realisierung einer besonders guten, flexiblen und ergonomischen Bedienbarkeit des Kugelelements 24 ist das Kugelelement - wie insbesondere aus Fig. 1a, 2a und 3a erkennbar ist - für den Fahrer auch von einer jeweiligen, dem Fahrer und der Vorderseite 30 abgewandten Rückseite 32 des Lenkrads 10 und des Kugelelements 24 aus zugänglich.

Wie insbesondere anhand von Fig. 2a erkennbar ist, kann der Fahrer das Kugelelement 24 auch von der jeweiligen Rückseite 32 aus berühren und in der Folge - wie in Fig. 2a durch Richtungspfeile 34 angedeutet ist - relativ zur Lenkradspeiche 18 verschwenken.

Dazu überragt das Kugelelement 24 die Lenkradspeiche 18 auf der Rückseite 32 von dem Fahrer weg zumindest teilweise. Alternativ dazu kann vorgesehen sein, dass das Kugelelement 24 auf der Rückseite 32 gegenüber der Lenkradspeiche 18 zu dem Fahrer hin zurückversetzt ist und für den Fahrer von der Rückseite 32 aus über eine korrespondierende Durchgangsöffnung zugänglich ist.

Mittels des Kugelelements 24 ist es beispielsweise möglich, ein auf einem Bildschirm des Personenkraftwagens dargestelltes Zeigerelement, einen sogenannten Cursor, auf einer durch den Bildschirm angezeigten Bedienoberfläche zu bewegen. Das Zeigerelement kann aufgrund der beidseitigen Bedienbarkeit des Kugelelements 24 sowohl durch Verschwenken bzw. Drehen des Kugelelements 24 von der Vorderseite 30 aus als auch durch Verschwenken bzw. Drehen des Kugelelements 24 von der Rückseite 32 aus auf der Bedienoberfläche bewegt werden.

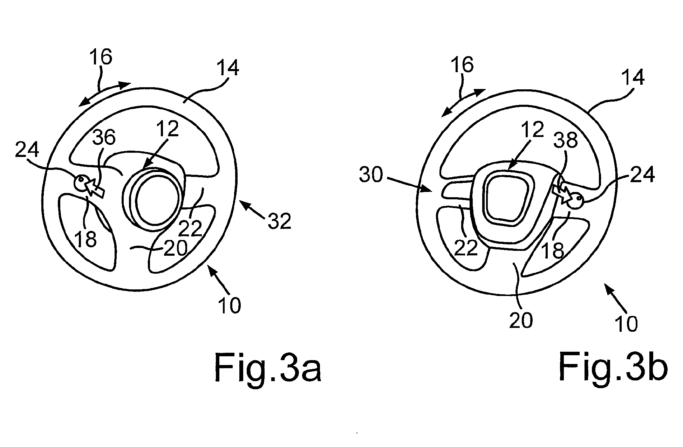

Wie aus Fig. 3a und 3b erkennbar ist, ist das Kugelelement 24 auch in einer senkrecht zur gedachten Ebene 26 verlaufenden Betätigungsrichtung vom Fahrer drückbar. Anhand von Fig. 3a ist erkennbar, dass der Fahrer das Kugelelement 24 von der Rückseite 32 aus entlang der Betätigungsrichtung auf sich zu drücken kann. Dadurch ist beispielsweise eine erste Funktion des Personenkraftwagens bewirkbar. Dieses Drücken auf den Fahrer und die Vorderseite 30 zu ist in Fig. 3a durch einen Richtungspfeil 36 angedeutet.

Anhand von Fig. 3b ist erkennbar, dass das Kugelelement 24 vom Fahrer auch entlang der Betätigungsrichtung wegdrückbar ist. Dadurch ist beispielsweise eine zweite, von der ersten Funktion unterschiedliche Funktion des Personenkraftwagens bewirkbar. Dieses Drücken vom Fahrer und der Vorderseite 30 weg auf die Rückseite 32 zu ist in Fig. 3b durch einen Richtungspfeil 38 angedeutet. Hierdurch ist ein besonders hoher Funktionserfüllungsumfang des Kugelelements 24 auf platzsparende und gewichts- sowie kostengünstige Weise realisiert. Dadurch, dass durch Drücken des Kugelelements 24 zwei unterschiedliche Funktionen bewirkt werden können, kann auf bauraumneutrale Weise eine besonders hohe Anzahl an Betätigungsmöglichkeiten bzw. Eingabemöglichkeiten realisiert werden.

## Patentansprüche

1. Lenkhandhabe (10) für einen Kraftwagen, über welche in ihrem am Kraftwagen montierten Zustand eine Richtungsänderung des Kraftwagens bewirkbar ist und welche wenigstens ein an einem korrespondierenden Befestigungselement (18) der Lenkhandhabe (10) gehaltenes Kugelelement (24) als ein Bedienelement aufweist, welches um wenigstens eine Schwenkachse relativ zum Befestigungselement (18) verschwenkbar und für einen das Kugelelement (24) verschwenkenden Nutzer von einer jeweiligen, dem Nutzer zugewandten Vorderseite (30) der Lenkhandhabe (10) und des Kugelelements (24) aus zugänglich ist,
**dadurch gekennzeichnet, dass**
das Kugelelement (24) für den Nutzer auch von einer jeweiligen, dem Nutzer und der Vorderseite (30) abgewandten Rückseite (32) der Lenkhandhabe (10) und des Kugelelements (24) aus zugänglich ist.

2. Lenkhandhabe (10) nach Anspruch 1,
**dadurch gekennzeichnet, dass**
durch ein Betätigen des Kugelelements (24) von der jeweiligen Vorderseite (30) aus eine erste Funktion des Kraftwagens und durch ein Betätigen des Kugelelements (24) von der jeweiligen Rückseite (32) aus eine von der ersten Funktion unterschiedliche, zweite Funktion des Kraftwagens bewirkbar ist.

3. Lenkhandhabe (10) nach einem der vorhergehenden Ansprüche,
**dadurch gekennzeichnet, dass**
das Kugelelement (24) um beliebige, in einer gemeinsamen Ebene (26) angeordnete Schwenkachsen verschwenkbar ist.

4. Lenkhandhabe (10) nach einem der vorhergehenden Ansprüche,
**dadurch kennzeichnet, dass**
das Kugelelement (24) senkrecht zur Schwenkachse bzw. Ebene (26) drückbar und für den das Kugelelement (24) drückenden Nutzender sowohl von der jeweiligen Vorderseite (30) als auch von der jeweiligen Rückseite (32) aus zugänglich ist.

5. Lenkhandhabe (10) nach einem der vorhergehenden Ansprüche,
**dadurch gekennzeichnet, dass**
die Lenkhandhabe (10) als Lenkrad (10) mit einer Lenkradnabe (12) und einem Lenkradkranz (14) ausgebildet ist, welcher über wenigstens eine Lenkradspeiche (18, 20, 22) mit der Lenkradnabe (12) verbunden ist, wobei das Kugelelement (24) an der Lenkradspeiche (18) als dem Befestigungselement (18) gehalten ist.

6. Kraftwagen mit einer Lenkhandhabe (10) nach einem der vorhergehenden Ansprüche.

## Claims

1. Steering handling device (10) for a motor vehicle, by means of which, in its state of being mounted on the motor vehicle, a change in direction of the motor vehicle can be brought about, and which has at least one ball element (24) held on a corresponding attachment element (18) of the steering handling device (10) as an operating element, which can be swivelled about at least one swivel axis relative to the attachment element (18) and is accessible for a user swivelling the ball element (24) from a particular front side (30) of the steering handling device (10) and the ball element (24) facing the user,
**characterised in that**
the ball element (24) is accessible for the user also from a particular rear side (32) of the steering handling device (10) and the ball element (24) that is facing away from the user and the front side (30).

2. Steering handling device (10) according to Claim 1,
**characterised in that**
through activation of the ball element (24) from the particular front side (30), a first function of the motor vehicle can be brought about and through activation of the ball element (24) from the particular rear side (32) a second function different from the first function of the motor vehicle can be brought about.

3. Steering handling device (10) according to any one of the preceding claims,
**characterised in that**
the ball element (24) can be swivelled around any swivel axes arranged in a common plane (26).

4. Steering handling device (10) according to any one of the preceding claims,
**characterised in that**
the ball element (24) can be pressed perpendicular to the swivel axis or plane (26) and is accessible for the user pressing the ball element (24) both from the particular front side (30) and from the particular rear side (32).

5. Steering handling device (10) according to any one of the preceding claims,
**characterised in that** the steering handling device (10) is designed as a steering wheel (10) with a steering wheel hub (12) and a steering wheel rim (14) which is connected to the steering wheel hub (12) via at least one steering wheel spoke (18, 20, 22), whereby the ball element (24) is held on the steering wheel spoke (18) as the attachment element (18).

6. Motor vehicle with a steering handling device (10) according to any one of the preceding claims.

## Revendications

1. Manette de direction (10) pour un véhicule automobile, par l'intermédiaire de laquelle un changement de direction du véhicule automobile peut être provoqué lorsqu'elle est montée dans le véhicule automobile et qui comporte comme élément de commande au moins un élément à boule (24) maintenu sur un élément de fixation correspondant (18) de la manette de direction (10), lequel élément de commande peut pivoter autour d'au moins un axe de pivotement par rapport à l'élément de fixation (18) et est accessible, pour un utilisateur faisant pivoter l'élément à boule (24), à partir du côté avant (30) respectif, proche de l'utilisateur, de la manette de direction (10) et de l'élément à boule (24),
**caractérisée en ce que** l'élément à boule (24) est aussi accessible pour l'utilisateur à partir du côté arrière (32) respectif, éloigné de l'utilisateur et du côté avant (30), de la manette de direction (10) et de l'élément à boule (24).

2. Manette de direction (10) selon la revendication 1, **caractérisée en ce qu'**un actionnement de l'élément à boule (24) à partir du côté avant respectif (30) peut provoquer une première fonction du véhicule automobile et un actionnement de l'élément à boule (24) à partir du côté arrière respectif (32) peut provoquer une deuxième fonction du véhicule automobile différente de la première fonction.

3. Manette de direction (10) selon l'une des revendications précédentes, **caractérisée en ce que** l'élément à boule (24) est pivotant autour d'axes de pivotement quelconques agencés dans un plan (26) commun.

4. Manette de direction (10) selon l'une des revendications précédentes, **caractérisée en ce que** l'élément à boule (24) peut être poussé perpendiculairement à l'axe de pivotement ou au plan (26) et est accessible pour l'utilisateur poussant l'élément à boule (24) aussi bien à partir du côté avant (30) respectif qu'à partir du côté arrière (32) respectif.

5. Manette de direction (10) selon l'une des revendications précédentes, **caractérisée en ce que** la manette de direction (10) est conçue comme un volant (10) avec un moyeu de volant (12) et avec une jante de volant de direction (14), qui est reliée au moyeu de volant (12) par l'intermédiaire d'au moins un rayon de volant (18, 20, 22), l'élément à boule (24) étant maintenu sur le rayon de volant (18) comme élément de fixation (18).

6. Véhicule automobile avec une manette de direction (10) selon l'une des revendications précédentes.
